# EUROPEAN PATENT APPLICATION

(11) **EP 4 783 336 A1**
(43) Date of publication of application: **29.07.2026**
(21) Application number: 25225250.7
(22) Date of filing: 18.12.2025
(51) Int. Cl.: H01M 50/342, H01M 50/375

(54) **CAP ASSEMBLY FOR SECONDARY BATTERY**

(30) Priority: 24.01.2025 KR 20250011235
(71) Applicant: Samsung SDI Co., Ltd., Yongin-si, Gyeonggi-do 17084 (KR)
(72) Inventor: SHIN, Jaeseung, 17084 Yongin-Si (KR)
(74) Representative: Maiwald GmbH

(57) **Abstract**

A cap assembly for a secondary battery, the cap assembly including a cap plate seated on and coupled to an opening in a case that accommodates an electrode assembly, a first vent portion connected to the cap plate, the first vent portion fracturing at a first fracture pressure, and a second vent portion coupled to at least one of the first vent portion or a region adjacent to the first vent portion, the second vent portion fracturing at a second fracture pressure different from the first fracture pressure.

## Description

### BACKGROUND

### 1. Field

The present disclosure relates to a cap assembly for a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

When the secondary battery is charged and/or discharged, gas may be generated inside the secondary battery. When the internal gas pressure increases, the safety vent of the secondary battery may fracture, and thereby, the internal gas may be discharged to the outside of the secondary battery.

The above information disclosed in this Background section is for enhancement of understanding of the background of the present disclosure, and therefore, it may contain information that does not constitute related (or prior) art.

### SUMMARY

Embodiments include a cap assembly for a secondary battery, the cap assembly including a cap plate seated on and coupled to an opening formed in a case that accommodates an electrode assembly, a first vent portion connected to the cap plate, the first vent portion fracturing at a first fracture pressure, and a second vent portion coupled to at least one of the first vent portion or a region adjacent to the first vent portion, the second vent portion fracturing at a second fracture pressure different from the first fracture pressure.

A vertical level of an upper surface of the first vent portion may be lower than a vertical level of an upper surface of the cap plate.

A material of the first vent portion and a material of the second vent portion may be different from each other.

A material of the second vent portion may include an insulating material.

The second vent portion may include a central portion and an end portion outside the central portion, the end portion being coupled to the first vent portion, and the central portion being spaced apart from the first vent portion.

The end portion may be coupled to a welded portion between the first vent portion and the cap plate.

The second vent portion may be in contact with the first vent portion.

The second vent portion may be below the first vent portion.

A melting point of the second vent portion may be lower than a melting point of the first vent portion.

A melting point of the second vent portion may be greater than or equal to 130°C.

The second fracture pressure may be lower than the first fracture pressure.

The second vent portion may be above the first vent portion.

A melting point of the second vent portion may be greater than or equal to 150°C.

The second fracture pressure may be higher than the first fracture pressure.

The cap assembly for a secondary battery may further include a third vent portion coupled to at least one of the first vent portion and the region adjacent to the first vent portion, the third vent portion fracturing at a third fracture pressure, wherein the second vent portion is below the first vent portion, and the third vent portion is above the first vent portion.

A melting point of the third vent portion may be higher than a melting point of the second vent portion.

The second fracture pressure may be lower than the first fracture pressure, and the third fracture pressure may be higher than the first fracture pressure.

The first vent portion may include a notch.

A thickness of the second vent portion may be smaller than a thickness of the first vent portion.

Embodiments include a secondary battery, including an electrode assembly including a positive electrode, a negative electrode, and a separator between the positive electrode and the negative electrode, a case in which the electrode assembly is accommodated, and a cap assembly coupled to the case, wherein the cap assembly includes a cap plate seated on and coupled to an opening of the case, a first vent portion connected to the cap plate, the first vent portion fracturing at a first fracture pressure, and a second vent portion coupled to at least one of the first vent portion and a region adjacent to the first vent portion, the second vent portion fracturing at a second fracture pressure different from the first fracture pressure.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 illustrates an example of a secondary battery according to an embodiment of the present disclosure;
FIG. 2 is a cross-sectional view illustrating an example of the secondary battery according to an embodiment of the present disclosure;
FIG. 3 illustrates an example of a cap assembly according to an embodiment of the present disclosure;
FIG. 4 illustrates an enlarged example of the cap assembly according to an embodiment of the present disclosure;
FIG. 5 illustrates an example of a cap assembly according to an embodiment of the present disclosure;
FIG. 6 illustrates an example of a cap assembly according to an embodiment of the present disclosure;
FIG. 7 illustrates an enlarged example of the cap assembly according to an embodiment of the present disclosure;
FIG. 8 illustrates an example of a cap assembly according to an embodiment of the present disclosure;
FIG. 9 illustrates an example of a cap assembly according to an embodiment of the present disclosure;
FIG. 10 illustrates an enlarged example of the cap assembly according to an embodiment of the present disclosure; and
FIG. 11 illustrates an example of a cap assembly according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

In the present disclosure, sizes and relative sizes of layers and regions shown in the drawings may be exaggerated for clarity of description. That is, the sizes shown in the drawings are merely for convenience of understanding and are not limited thereto. In addition, throughout this specification, the same reference numerals refer to the same components.

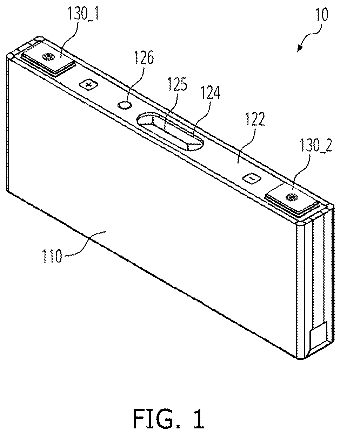

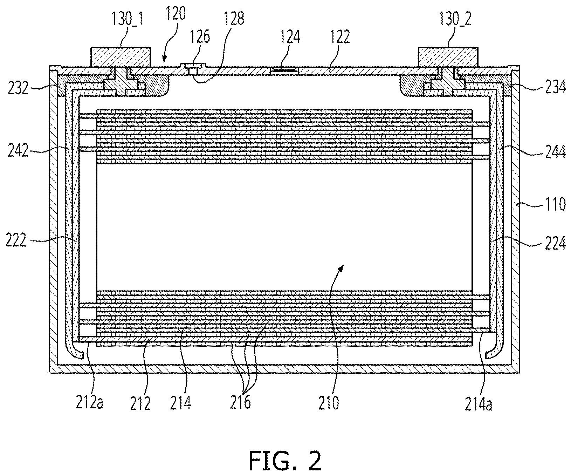

FIG. 1 illustrates an example of a secondary battery 10 according to an embodiment of the present disclosure, and FIG. 2 is a cross-sectional view illustrating an example of the secondary battery 10 according to an embodiment of the present disclosure.

Referring to FIGS. 1 and 2, the secondary battery 10 according to one or more embodiments of the present disclosure may include at least one electrode assembly 210 wound with a separator 216 as an insulator between a positive electrode 212 and a negative electrode 214, a case 110 in which the at least one electrode assembly 210 is accommodated, and a cap assembly 120 coupled to an opening of the case 110.

Each of the positive electrode 212 and the negative electrode 214 may include a current collector made of a thin metal foil having a coated portion on which an active material is coated and uncoated portions 212a and 214a on which an active material is not coated.

The positive electrode 212 and the negative electrode 214 are wound after interposing the separator 216, which is an insulator, therebetween. However, the present disclosure is not limited thereto, and the at least one electrode assembly 210 may have a structure in which the positive electrode 212 and the negative electrode 214, each made of a plurality of sheets, are alternately stacked with a separator interposed therebetween.

The case 110 may form an overall outer appearance of the secondary battery 10 and may be made of a conductive metal, such as aluminum, an aluminum alloy, or nickel-plated steel. In addition, the case 110 may provide a space in which the at least one electrode assembly 210 is accommodated.

The cap assembly 120 may include a cap plate 122 that covers an opening in the case 110, and the case 110 and the cap plate 122 may be made of a conductive material. Positive and negative electrode terminals 130_1 and 130_2, which are electrically connected to the positive electrode 212 and the negative electrode 214, respectively, may be installed to penetrate the cap plate 122 and protrude outwardly therethrough.

In addition, outer peripheral surfaces of upper pillars of the positive and negative electrode terminals 130_1 and 130_2 protruding outwardly from the cap plate 122 may be threaded and may be fixed to the cap plate 122 by nuts.

However, the present disclosure is not limited thereto, and the positive and negative electrode terminals 130_1 and 130_2 may have a rivet structure and may be riveted or welded to the cap plate 122.

In addition, the cap plate 122 may be made of a thin plate and may be coupled to the opening in the case 110, and an electrolyte injection port 128 into which a sealing stopper 126 may be installed may be located in the cap plate 122, and a vent portion 124 having a notch may be installed.

The positive and negative electrode terminals 130_1 and 130_2 may be electrically connected to current collectors including first and second current collectors 222 and 224 (hereinafter referred to as a positive electrode current collector and a negative electrode current collector), by being bonded or coupled (e.g., by welding) to the uncoated portion 212a (positive) and the uncoated portion 214a (negative), respectively.

For example, the positive and negative electrode terminals 130_1 and 130_2 may be welded to the positive and negative electrode current collectors 222 and 224, respectively. However, the present disclosure is not limited thereto, and the positive and negative electrode terminals 130_1 and 130_2 and the positive and negative electrode current collectors 222 and 224 may be integrally formed in one or more embodiments.

In addition, an insulation member may be installed between the at least one electrode assembly 210 and the cap plate 122. The insulation member may include first and second lower insulation members 232 and 234, and each of the first and second lower insulation members 232 and 234 may also have a portion located between the at least one electrode assembly 210 and the case 110.

In addition, according to one or more embodiments of the present disclosure, one end of a separation member may face one side of the at least one electrode assembly 210 and may be installed between the insulation member and the positive or negative electrode terminals 130_1 and 130_2. In one or more embodiments, the separation member may include first and second separation members 242 and 244.

Accordingly, the positive and negative electrode terminals 130_1 and 130_2, which may be welded to the positive and negative electrode current collectors 222 and 224, may be coupled to first ends of the first and second lower insulation members 232 and 234 and the first and second separation members 242 and 244.

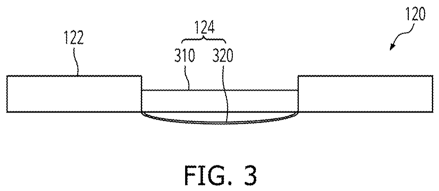

In an embodiment, the cap plate 122 may be seated (e.g., seated on) and coupled to an opening formed in the case 110 in which the at least one electrode assembly 210 is accommodated. In addition, the cap plate 122 may include a vent portion 124 located between the positive electrode terminal 130_1 and the negative electrode terminal 130_2. Here, the vent portion 124 may include a plurality of vent portions. Specifically, the vent portion 124 may include a first vent portion connected to the cap plate 122, the first vent portion fracturing at a first fracture pressure, and a second vent portion that is coupled to at least one of the first vent portion and a region adjacent to the first vent portion, the second vent portion fracturing at a second fracture pressure different from the first fracture pressure. In this case, a notch 125 may be formed in the first vent portion. Examples of the vent portion 124 will be described in more detail below with reference to FIGS. 3 through 10.

The secondary battery 10 may be, for example, a lithium battery cell or a sodium battery cell. However, the secondary battery 10 may include all batteries that may repeatedly supply electricity through charging and discharging. In an embodiment, when the secondary battery 10 is a lithium battery cell, it may be used in an electric vehicle (EV) because it exhibits excellent lifespan characteristics and high-rate characteristics. For example, it may be used in a plug-in hybrid electric vehicle (PHEV) or other hybrid vehicle (e.g., and EVs). In addition, lithium battery cells may be used in fields requiring storage of large amounts of electricity. For example, they may be used in electric bicycles, power tools, and energy storage systems (ESS).

With this configuration, when the pressure (or internal gas pressure) inside the case increases due to thermal runaway of the secondary battery, the vent portion may fracture so that gas inside the case may be discharged to the outside of the secondary battery. In addition, because the vent portion includes a plurality of vent portions, even if one vent portion is damaged by an external impact, the introduction of oxygen or foreign matter into the secondary battery may be prevented.

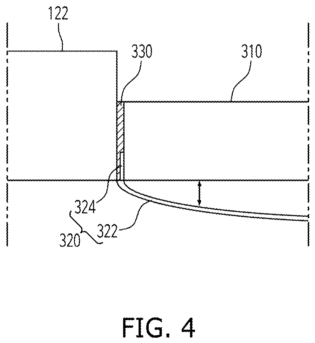

FIG. 3 illustrates an example of a cap assembly 120 according to an embodiment of the present disclosure, and FIG. 4 illustrates an enlarged example of the cap assembly 120 of FIG. 3 according to an embodiment of the present disclosure.

Referring to FIGS. 3 and 4, in an embodiment, the cap assembly 120 may include a cap plate 122 that is seated and coupled to an opening formed in a case (for example, 110 of FIG. 1) in which an electrode assembly is accommodated, and a vent portion 124. Here, the vent portion 124 may include a first vent portion 310 that is connected to the cap plate 122 and fractures at a first fracture pressure, and a second vent portion 320 that is coupled to at least one of the first vent portion 310 and a region adjacent to the first vent portion 310 and fractures at a second fracture pressure different from the first fracture pressure. In addition, in order to facilitate fracturing of the first vent portion 310, a notch (for example, 125 of FIG. 1) may be formed in the first vent portion 310.

In an embodiment, the vertical level of an upper surface of the first vent portion 310 may be lower than the vertical level of an upper surface of the cap plate 122, e.g., relative to a bottom of the case 110 (FIGS. 2 and 3). In addition, the thickness of the first vent portion 310 may be smaller than the thickness of the cap plate 122. Furthermore, the thickness of the second vent portion 320 may be smaller than the thickness of the first vent portion 310.

In an embodiment, the second vent portion 320 may be disposed below the first vent portion 310. In this case, a melting point of the second vent portion 320 may be lower than a melting point of the first vent portion 310. For example, the melting point of the second vent portion 320 may be greater than or equal to 130°C, but may vary.

In an embodiment, a second fracture pressure of the second vent portion 320 may be lower than a first fracture pressure of the first vent portion 310. For example, the second fracture pressure may be lower than the first fracture pressure by at least 1 kgf/cm², but this may vary.

In an embodiment, a material of the first vent portion 310 and a material of the second vent portion 320 may differ from each other. Specifically, the material of the first vent portion 310 may include a conductive material, and the material of the second vent portion 320 may include an insulating material. For example, the first vent portion 310 may include aluminum (Al), and the second vent portion 320 may include at least one of Butadiene Rubber (BR), Styrene Butadiene Rubber (SBR), Nitrile Butadiene Rubber (NBR), Polypropylene (PP), Polyvinyl Chloride (PVC), or Polyethylene (PE), but this may vary. In addition, the material of the first vent portion 310 may be the same as the material of the cap plate 122, but this may vary.

In an embodiment, referring to FIG. 4, the second vent portion 320 may include a central portion 322 and an end portion 324 disposed outside the central portion 322. Here, the end portion 324 may be coupled to the first vent portion 310. Specifically, the end portion 324 may be coupled to a welded portion 330 between the first vent portion 310 and the cap plate 122. In addition, the central portion 322 may be spaced apart from a lower surface of the first vent portion 310. For example, a center of the central portion 322 may be spaced apart by at least 1 mm from the lower surface of the first vent portion 310.

In an embodiment, the end portion 324 of the second vent portion 320 may be coupled to the first vent portion 310 along a perimeter of the first vent portion 310. Accordingly, a space between the central portion 322 of the second vent portion 320 and the lower surface of the first vent portion 310 may be sealed. In addition, an area of the second vent portion 320 may be the same as or greater than an area of the lower surface of the first vent portion 310.

In FIGS. 3 and 4, the second vent portion 320 is illustrated as being coupled to the first vent portion 310, but the second vent portion 320 may be coupled to a region adjacent to the first vent portion 310 (for instance, a portion of the cap plate 122 adjacent to the first vent portion 310).

With this configuration, when the internal gas pressure increases, the second vent portion and the first vent portion may sequentially fracture, so that the internal gas may be discharged to the outside of the secondary battery. In addition, even if the first vent portion is damaged by an external impact, the second vent portion may prevent oxygen or external foreign matter from being introduced into the inside of the secondary battery. Furthermore, because the first vent portion and the second vent portion are spaced apart, transmission of the external impact applied to the first vent portion and to the second vent portion may be prevented. Accordingly, the safety of the secondary battery may be improved.

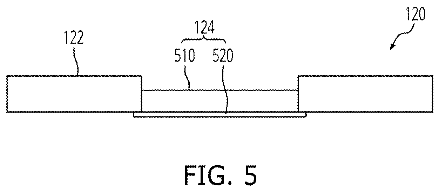

FIG. 5 illustrates an example of a cap assembly 120 according to an embodiment of the present disclosure.

Referring to FIG. 5, in an embodiment, the cap assembly 120 may include a cap plate 122 that is seated and coupled to an opening formed in a case (for example, 110 of FIG. 1) in which an electrode assembly is accommodated, and a vent portion 124. Here, the vent portion 124 may include a first vent portion 510 that is connected to the cap plate 122 and fractures at a first fracture pressure, and a second vent portion 520 that is coupled to at least one of the first vent portion 510 and a region adjacent to the first vent portion 510 and fractures at a second fracture pressure different from the first fracture pressure. In addition, in order to facilitate fracturing, a notch (for example, 125 of FIG. 1) may be formed in the first vent portion.

In an embodiment, the vertical level of an upper surface of the first vent portion 510 may be lower than the vertical level of an upper surface of the cap plate 122. In addition, a thickness of the first vent portion 510 may be smaller than a thickness of the cap plate 122. Furthermore, a thickness of the second vent portion 520 may be smaller than a thickness of the first vent portion 510.

In an embodiment, the second vent portion 520 may be disposed below the first vent portion 510. In this case, a melting point of the second vent portion 520 may be lower than a melting point of the first vent portion 510. For example, the melting point of the second vent portion 520 may be greater than or equal to 130°C, but this may vary.

In an embodiment, a second fracture pressure of the second vent portion 520 may be lower than a first fracture pressure of the first vent portion 510. For example, the second fracture pressure may be lower by at least 1 kgf/cm² than the first fracture pressure, but this may vary.

In an embodiment, the material of the first vent portion 510 and the material of the second vent portion 520 may differ from each other. Specifically, the first vent portion 510 may include a conductive material, and the second vent portion 520 may include an insulating material.

In an embodiment, the second vent portion 520 may be in close contact with the first vent portion 510. For example, the second vent portion 520 may be coated on a lower surface of the first vent portion 510 by using at least one of spray coating, chemical vapor deposition (CVD), electrophoretic deposition (EPD), sol-gel coating, and plasma coating. In other embodiments, the second vent portion 520 may be attached to the lower surface of the first vent portion 510 using tape or the like.

In an embodiment, the second vent portion 520 may cover the lower surface of the first vent portion 510. In addition, an area of the second vent portion 520 may be the same as or greater than an area of the lower surface of the first vent portion 510.

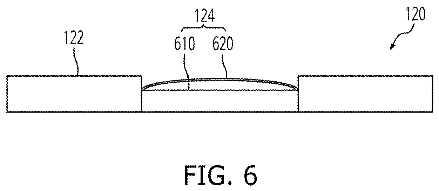

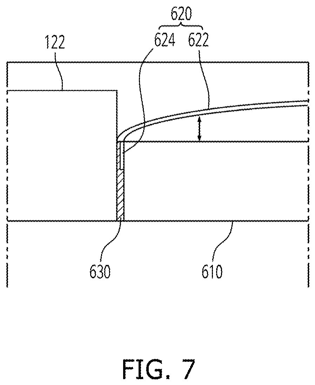

FIG. 6 illustrates an example of a cap assembly 120 according to an embodiment of the present disclosure, and FIG. 7 illustrates an enlarged example of the cap assembly 120 of FIG. 6 according to an embodiment of the present disclosure.

Referring to FIGS. 6 and 7, in an embodiment, the cap assembly 120 may include a cap plate 122 that is seated and coupled to an opening formed in a case (for example, 110 of FIG. 1) in which an electrode assembly is accommodated, and a vent portion 124. Here, the vent portion 124 may include a first vent portion 610 that is connected to the cap plate 122 and fractures at a first fracture pressure, and a second vent portion 620 that is coupled to at least one of the first vent portion 610 and a region adjacent to the first vent portion 610 and fractures at a second fracture pressure different from the first fracture pressure. In addition, in order to facilitate fracturing, a notch (for example, 125 of FIG. 1) may be formed in the first vent portion.

In an embodiment, the vertical level of an upper surface of the first vent portion 610 may be lower than the vertical level of an upper surface of the cap plate 122. In addition, a thickness of the first vent portion 610 may be smaller than a thickness of the cap plate 122. Furthermore, a thickness of the second vent portion 620 may be smaller than a thickness of the first vent portion 610.

In an embodiment, the second vent portion 620 may be disposed above the first vent portion 610. Here, the melting point of the second vent portion 620 may be greater than or equal to 150°C, but the melting point of the second vent portion 620 may be higher than a melting point of the first vent portion 610.

In an embodiment, a second fracture pressure of the second vent portion 620 may be higher than a first fracture pressure of the first vent portion 610. For example, the second fracture pressure may be at least 1 kgf/cm² higher than the first fracture pressure, but this may vary.

In an embodiment, the material of the first vent portion 610 and the material of the second vent portion 620 may differ from each other. Specifically, the first vent portion 610 may include a conductive material, and the second vent portion 620 may include an insulating material. For example, the first vent portion 610 may include aluminum (Al), and the second vent portion 620 may include at least one of polycarbonate (PC), polyoxymethylene (POM), polyethylene terephthalate (PET), and polysulfone (PSU), but this may vary. In addition, the material of the first vent portion 610 may be the same as the material of the cap plate 122, but this may vary.

In an embodiment, referring to FIG. 7, the second vent portion 620 may include a central portion 622 and an end portion 624 disposed outside the central portion 622. Here, the end portion 624 may be coupled to the first vent portion 610. Specifically, the end portion 624 may be coupled to a welded portion 630 between the first vent portion 610 and the cap plate 122. In addition, the central portion 622 may be spaced apart from an upper surface of the first vent portion 610. For example, a center of the central portion 622 may be spaced apart by at least 1 mm from the upper surface of the first vent portion 610.

In an embodiment, the end portion 624 of the second vent portion 620 may be coupled to the first vent portion 610 along a perimeter of the first vent portion 610. Accordingly, a space between the central portion 622 of the second vent portion 620 and the upper surface of the first vent portion 610 may be sealed. In addition, an area of the second vent portion 620 may be the same as or greater than an area of the upper surface of the first vent portion 610.

With this configuration, when the internal gas pressure increases, the first vent portion and the second vent portion may sequentially fracture, so that the internal gas may be discharged to the outside of the secondary battery. In addition, even if the second vent portion is damaged by an external impact, the first vent portion may prevent oxygen or external foreign matter from being introduced into the inside of the secondary battery. Furthermore, because the first vent portion and the second vent portion are spaced apart, an external impact applied to the second vent portion may be prevented from being transmitted to the first vent portion. Accordingly, the safety of the secondary battery may be improved.

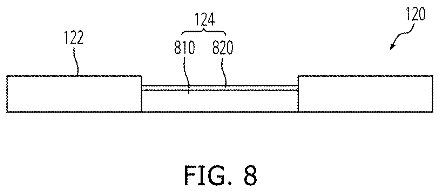

FIG. 8 illustrates an example of a cap assembly 120 according to an embodiment of the present disclosure.

Referring to FIG. 8, in an embodiment, the cap assembly 120 may include a cap plate 122 that is seated and coupled to an opening formed in a case (for example, 110 of FIG. 1) in which an electrode assembly is accommodated, and a vent portion 124. Here, the vent portion 124 may include a first vent portion 810 that is connected to the cap plate 122 and fractures at a first fracture pressure, and a second vent portion 820 that is coupled to at least one of the first vent portion 810 or a region adjacent to the first vent portion 810 and fractures at a second fracture pressure different from the first fracture pressure. In addition, in order to facilitate fracturing, a notch (for example, 125 of FIG. 1) may be formed in the first vent portion.

In an embodiment, the vertical level of an upper surface of the first vent portion 810 may be lower than the vertical level of an upper surface of the cap plate 122. In addition, a thickness of the first vent portion 810 may be smaller than a thickness of the cap plate 122. Furthermore, a thickness of the second vent portion 820 may be smaller than a thickness of the first vent portion 810.

In an embodiment, the second vent portion 820 may be disposed above the first vent portion 810. Here, the melting point of the second vent portion 820 may be greater than or equal to 150°C, but this may vary.

In an embodiment, a second fracture pressure of the second vent portion 820 may be higher than a first fracture pressure of the first vent portion 810. For example, the second fracture pressure may be at least 1 kgf/cm² higher than the first fracture pressure, but this may vary.

In an embodiment, the material of the first vent portion 810 and the material of the second vent portion 820 may differ from each other. Specifically, the first vent portion 810 may include a conductive material, and the second vent portion 820 may include an insulating material.

In an embodiment, the second vent portion 820 may be in close contact with the first vent portion 810. For example, the second vent portion 820 may be coated on an upper surface of the first vent portion 810 by using at least one of spray coating, chemical vapor deposition (CVD), electrophoretic deposition (EPD), sol-gel coating, and plasma coating. In other embodiments, the second vent portion 820 may be attached to the upper surface of the first vent portion 810 using tape or the like.

In an embodiment, the second vent portion 820 may cover the upper surface of the first vent portion 810. In addition, an area of the second vent portion 820 may be the same as or greater than an area of the upper surface of the first vent portion 810.

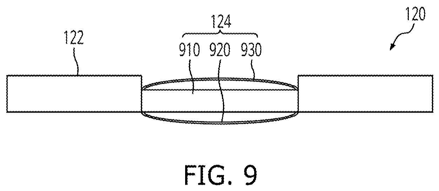

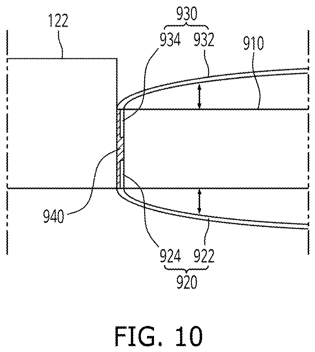

FIG. 9 illustrates an example of a cap assembly 120 according to an embodiment of the present disclosure, and FIG. 10 illustrates an enlarged example of the cap assembly 120 of FIG. 9 according to an embodiment of the present disclosure.

Referring to FIGS. 9 and 10, in an embodiment, the cap assembly 120 may include a cap plate 122 that is seated and coupled to an opening formed in a case (for example, 110 of FIG. 1) in which an electrode assembly is accommodated, and a vent portion 124. Here, the vent portion 124 may include a first vent portion 910 that is connected to the cap plate 122 and fractures at a first fracture pressure, a second vent portion 920 that is coupled to at least one of the first vent portion 910 or a region adjacent to the first vent portion 910 and fractures at a second fracture pressure different from the first fracture pressure, and a third vent portion 930 that is coupled to at least one of the first vent portion 910 or a region adjacent to the first vent portion 910 and fractures at a third fracture pressure. In addition, in order to facilitate fracturing, a notch (for example, 125 of FIG. 1) may be formed in the first vent portion.

In an embodiment, the vertical level of an upper surface of the first vent portion 910 may be lower than the vertical level of an upper surface of the cap plate 122. In addition, the thickness of the first vent portion 910 may be smaller than the thickness of the cap plate 122. Furthermore, each thickness of the second vent portion 920 and the third vent portion 930 may be smaller than the thickness of the first vent portion 910.

In an embodiment, the second vent portion 920 may be disposed below the first vent portion 910. In this case, a melting point of the second vent portion 920 may be lower than a melting point of the first vent portion 910. For example, the melting point of the second vent portion 920 may be greater than or equal to 130°C, but this may vary.

In an embodiment, the third vent portion 930 may be disposed above the first vent portion 910. In this case, a melting point of the third vent portion 930 may be higher than a melting point of the second vent portion 920. For example, the melting point of the third vent portion 930 may be greater than or equal to 150°C, but this may vary.

In an embodiment, a second fracture pressure of the second vent portion 920 may be lower than the first fracture pressure of the first vent portion 910. For example, the second fracture pressure may be lower by at least 1 kgf/cm² than the first fracture pressure, but this may vary. In addition, a third fracture pressure of the third vent portion 930 may be higher than the first fracture pressure of the first vent portion 910. For example, the third fracture pressure may be at least 1 kgf/cm² higher than the first fracture pressure, but this may vary.

In an embodiment, a material of the first vent portion 910 and a material of the second vent portion 920 may differ from each other. Specifically, the first vent portion 910 may include a conductive material, and the second vent portion 920 may include an insulating material. For example, the first vent portion 910 may include aluminum (Al), and the second vent portion 920 may include at least one of Butadiene Rubber (BR), Styrene Butadiene Rubber (SBR), Nitrile Butadiene Rubber (NBR), Polypropylene (PP), Polyvinyl Chloride (PVC), and Polyethylene (PE), but this may vary. In addition, the material of the third vent portion 930 may be the same as that of the second vent portion 920, but this may vary. The third vent portion 930 may include an insulating material different from that of the second vent portion 920.

In an embodiment, referring to FIG. 10, the second vent portion 920 may include a central portion 922 and an end portion 924 disposed outside the central portion 922. Here, the end portion 924 may be coupled to the first vent portion 910. Specifically, the end portion 924 may be coupled to a welded portion 940 between the first vent portion 910 and the cap plate 122. In addition, the central portion 922 may be spaced apart from a lower surface of the first vent portion 910. For example, a center of the central portion 922 may be spaced apart by at least 1 mm from the lower surface of the first vent portion 910.

In an embodiment, the end portion 924 of the second vent portion 920 may be coupled to the first vent portion 910 along a perimeter of the first vent portion 910. Accordingly, a space between the central portion 922 of the second vent portion 920 and the lower surface of the first vent portion 910 may be sealed. In addition, an area of the second vent portion 920 may be the same as or greater than an area of the lower surface of the first vent portion 910.

In an embodiment, the third vent portion 930 may include a central portion 932 and an end portion 934 disposed outside the central portion 932. Here, the end portion 934 may be coupled to the first vent portion 910. Specifically, the end portion 934 may be coupled to the welded portion 940 between the first vent portion 910 and the cap plate 122. In addition, the central portion 932 may be spaced apart from an upper surface of the first vent portion 910. For example, a center of the central portion 932 may be spaced apart by at least 1 mm from the upper surface of the first vent portion 910.

In an embodiment, the end portion 934 of the third vent portion 930 may be coupled to the first vent portion 910 along a perimeter of the first vent portion 910. Accordingly, a space between the central portion 932 of the third vent portion 930 and the upper surface of the first vent portion 910 may be sealed. In addition, an area of the third vent portion 930 may be the same as or greater than an area of the upper surface of the first vent portion 910.

With this configuration, when the internal gas pressure increases, the second vent portion, the first vent portion, and the third vent portion may sequentially fracture, so that the internal gas may be discharged to the outside of the secondary battery. In addition, even if the third vent portion is damaged by an external impact, the first vent portion and the second vent portion may prevent oxygen or external foreign matter from being introduced into the inside of the secondary battery. Furthermore, because the first vent portion, the second vent portion, and the third vent portion are spaced apart from one another, an external impact applied to the third vent portion may be prevented from being transmitted to the first vent portion and the second vent portion. Accordingly, the safety of the secondary battery may be improved.

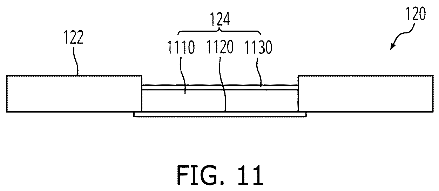

FIG. 11 illustrates an example of a cap assembly 120 according to an embodiment of the present disclosure.

Referring to FIG. 11, in an embodiment, the cap assembly 120 may include a cap plate 122 that is seated and coupled to an opening formed in a case (for example, 110 of FIG. 1) in which an electrode assembly is accommodated, and a vent portion 124. Here, the vent portion 124 may include a first vent portion 1110 that is connected to the cap plate 122 and fractures at a first fracture pressure, a second vent portion 1120 that is coupled to at least one of the first vent portion 1110 and a region adjacent to the first vent portion 1110 and fractures at a second fracture pressure different from the first fracture pressure, and a third vent portion 1130 that is coupled to at least one of the first vent portion 1110 and a region adjacent to the first vent portion 1110 and fractures at a third fracture pressure. In addition, in order to facilitate fracturing, a notch (for example, 125 of FIG. 1) may be formed in the first vent portion 1110.

In an embodiment, the vertical level of an upper surface of the first vent portion 1110 may be lower than the vertical level of an upper surface of the cap plate 122. In addition, a thickness of the first vent portion 1110 may be smaller than a thickness of the cap plate 122. Furthermore, each thickness of the second vent portion 1120 and the third vent portion 1130 may be smaller than the thickness of the first vent portion 1110.

In an embodiment, the second vent portion 1120 may be disposed below the first vent portion 1110. In this case, a melting point of the second vent portion 1120 may be lower than a melting point of the first vent portion 1110. For example, the melting point of the second vent portion 1120 may be greater than or equal to 130°C, but this may vary.

In an embodiment, the third vent portion 1130 may be disposed above the first vent portion 1110. In this case, a melting point of the third vent portion 1130 may be higher than a melting point of the second vent portion 1120. For example, the melting point of the third vent portion 1130 may be greater than or equal to 150°C, but this may vary.

In an embodiment, a second fracture pressure of the second vent portion 1120 may be lower than the first fracture pressure of the first vent portion 1110. For example, the second fracture pressure may be lower by at least 1 kgf/cm² than the first fracture pressure, but this may vary. In addition, a third fracture pressure of the third vent portion 1130 may be higher than the first fracture pressure of the first vent portion 1110. For example, the third fracture pressure may be higher by at least 1 kgf/cm² than the first fracture pressure, but this may vary.

In an embodiment, the material of the first vent portion 1110 and the material of the second vent portion 1120 may differ from each other. Specifically, the first vent portion 1110 may include a conductive material, and the second vent portion 1120 may include an insulating material. In addition, the third vent portion 1130 may be made of the same material as the second vent portion 1120, but the third vent portion 1130 may include an insulating material different from the material of the second vent portion 1120.

In an embodiment, the second vent portion 1120 may be in close contact with the first vent portion 1110. For example, the second vent portion 1120 may be coated on a lower surface of the first vent portion 1110 by using at least one of spray coating, chemical vapor deposition (CVD), electrophoretic deposition (EPD), sol-gel coating, and plasma coating. In other embodiments, the second vent portion 1120 may be attached to the lower surface of the first vent portion 1110 using tape or the like. In a similar manner, the third vent portion 1130 may be in close contact with an upper surface of the first vent portion 1110.

In an embodiment, the second vent portion 1120 may cover the lower surface of the first vent portion 1110. In addition, an area of the second vent portion 1120 may be the same as or greater than an area of the lower surface of the first vent portion 1110. In a similar manner, the third vent portion 1130 may cover the upper surface of the first vent portion 1110. In addition, an area of the third vent portion 1130 may be the same as or greater than an area of the lower surface of the first vent portion 1110. Furthermore, the area of the second vent portion 1120 may be the same as or greater than the area of the third vent portion 1130.

If the safety vent of a secondary battery is damaged by an external impact, oxygen or foreign matter may be introduced into the interior of the secondary battery, which reduces the safety of the secondary battery.

According to some embodiments of the present disclosure, when the pressure inside the case (or the internal gas pressure) increases due to thermal runaway of the secondary battery, the vent portion may fracture so that the gas inside the case may be discharged to the outside of the secondary battery. In addition, because the vent portion includes a plurality of vent portions, even if one of the vent portions is damaged by an external impact, the introduction of oxygen or foreign matter into the inside of the secondary battery may be prevented.

According to some embodiments of the present disclosure, when the internal gas pressure increases, the second vent portion and the first vent portion may sequentially fracture, so that the internal gas may be discharged to the outside of the secondary battery. In addition, even if the first vent portion is damaged by an external impact, the second vent portion may prevent oxygen or external foreign matter from being introduced into the inside of the secondary battery. Furthermore, because the first vent portion and the second vent portion are spaced apart from each other, an external impact applied to the first vent portion may be prevented from being transmitted to the second vent portion. Accordingly, the safety of the secondary battery may be improved.

According to some embodiments of the present disclosure, when the internal gas pressure increases, the first vent portion and the second vent portion may sequentially fracture, so that the internal gas may be discharged to the outside of the secondary battery. In addition, even if the second vent portion is damaged by an external impact, the first vent portion may prevent oxygen or external foreign matter from being introduced into the inside of the secondary battery. Furthermore, because the first vent portion and the second vent portion are spaced apart from each other, an external impact applied to the second vent portion may be prevented from being transmitted to the first vent portion. Accordingly, the safety of the secondary battery may be improved.

According to some embodiments of the present disclosure, when the internal gas pressure increases, the second vent portion, the first vent portion, and the third vent portion may sequentially fracture, so that the internal gas may be discharged to the outside of the secondary battery. In addition, even if the third vent portion is damaged by an external impact, the first vent portion and the second vent portion may prevent oxygen or external foreign matter from being introduced into the inside of the secondary battery. Furthermore, because the first vent portion, the second vent portion, and the third vent portion are spaced apart from each other, an external impact applied to the third vent portion may be prevented from being transmitted to the first vent portion and the second vent portion. Accordingly, the safety of the secondary battery may be improved.

Although the present disclosure has been described above with respect to embodiments thereof, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A cap assembly (120) for a secondary battery (10), the cap assembly (120) comprising:
a cap plate (122) seated on and coupled to an opening in a case (110) that accommodates an electrode assembly (210);
a first vent portion (310) connected to the cap plate (122), the first vent portion (310) fracturing at a first fracture pressure; and
a second vent portion (320) coupled to at least one of the first vent portion (310) or a region adjacent to the first vent portion (310), the second vent portion (320) fracturing at a second fracture pressure different from the first fracture pressure.

2. The cap assembly (120) for a secondary battery (10) as claimed in claim 1, wherein a vertical level of an upper surface of the first vent portion (310) is lower than a vertical level of an upper surface of the cap plate (122).

3. The cap assembly (120) for a secondary battery (10) as claimed in claim 1 or 2, wherein a material of the first vent portion (310) and a material of the second vent portion (320) are different from each other.

4. The cap assembly (120) for a secondary battery (10) as claimed in any one of the preceding claims, wherein a material of the second vent portion (320) comprises an insulating material.

5. The cap assembly for a secondary battery as claimed in any one of the preceding claims, wherein the second vent portion (320) comprises a central portion (322) and an end portion (324) outside the central portion (322), the end portion (324) being coupled to the first vent portion (320), and the central portion being spaced apart from the first vent portion.

6. The cap assembly (120) for a secondary battery (10) as claimed in claim 5, wherein the end portion (324) is coupled to a welded portion (330) between the first vent portion and the cap plate.

7. The cap assembly (120) for a secondary battery (10) as claimed in any one of the preceding claims, wherein the second vent portion (320) is in contact with the first vent portion (310).

8. The cap assembly (120) for a secondary battery (10) as claimed in any one of the preceding claims, wherein the second vent portion (320) is below the first vent portion (310).

9. The cap assembly (120) for a secondary battery (10) as claimed in claim 8, wherein a melting point of the second vent portion (320) is lower than a melting point of the first vent portion (310), wherein preferably a melting point of the second vent portion is greater than or equal to 130°C.

10. The cap assembly (120) for a secondary battery (10) as claimed in claim 8, wherein the second fracture pressure is lower than the first fracture pressure.

11. The cap assembly (120) for a secondary battery (10) as claimed in any one of the preceding claims, wherein the second vent portion (320) is above the first vent portion (310), wherein preferably a melting point of the second vent portion is greater than or equal to 150°C.

12. The cap assembly (120) for a secondary battery (10) as claimed in claim 11, wherein the second fracture pressure is higher than the first fracture pressure.

13. The cap assembly (120) for a secondary battery (10) as claimed in any one of the preceding claims, further comprising a third vent portion (930) coupled to at least one of the first vent portion (910) and the region adjacent to the first vent portion (910), the third vent portion (930) fracturing at a third fracture pressure,
wherein the second vent portion (920) is below the first vent portion (910), and the third vent portion (930) is above the first vent portion (910).

14. The cap assembly (120) for a secondary battery (10) as claimed in claim 13, wherein a melting point of the third vent portion (930) is higher than a melting point of the second vent portion (920).

15. The cap assembly (120) for a secondary battery (10) as claimed in claim 13, wherein the second fracture pressure is lower than the first fracture pressure, and the third fracture pressure is higher than the first fracture pressure.
